# EUROPÄISCHE PATENTSCHRIFT

(11) **EP 2 536 993 B1**
(45) Veröffentlichungstag und Bekanntmachung des Hinweises auf die Patenterteilung: **08.10.2014**
(21) Anmeldenummer: 11705155.7
(22) Anmeldetag: 03.02.2011
(51) Int. Cl.: F28D 20/00

(54) **VERFAHREN, WÄRMESPEICHER UND WÄRMESPEICHERSYSTEM ZUR ERWÄRMUNG UND ABKÜHLUNG EINES ARBEITSFLUIDES**
METHOD, HEAT ACCUMULATOR AND HEAT ACCUMULATOR SYSTEM FOR HEATING AND COOLING A WORKING FLUID
PROCÉDÉ, ACCUMULATEUR THERMIQUE ET SYSTÈME D'ACCUMULATEUR THERMIQUE POUR CHAUFFER ET REFROIDIR UN FLUIDE DE TRAVAIL

(30) Priorität: 11.06.2010 DE 102010023416; 15.02.2010 DE 102010008111
(43) Veröffentlichungstag der Anmeldung: 26.12.2012
(73) Patentinhaber: Leuphana Universität Lüneburg, 21335 Lüneburg (DE)
(72) Erfinder: RUCK, Wolfgang, 21391 Reppenstedt (DE); OPEL, Oliver, 21337 Lüneburg (DE)
(74) Vertreter: Stork Bamberger
(86) Internationale Anmeldenummer: PCT/EP2011/000479
(87) Internationale Veröffentlichungsnummer: WO 2011/098228

(56) Entgegenhaltungen:
- GB-A- 2 081 875
- US-A- 4 161 211
- US-A- 4 823 864

## Beschreibung

Die Erfindung betrifft ein Verfahren, einen Wärmespeicher und ein Wärmespeichersystem zur Erwärmung und Abkühlung eines Arbeitsfluides unter Verwendung von wenigstens einem thermochemischen Wärmespeicher-Medium.

GB-A-2081875 zeigt ein Verfahren gemäss dem Oberbegriff des Patentanspruchs 1.

Herkömmliche Wärmespeicher nutzen Speichermedien wie Wasser, die sich durch eine hohe Wärmekapazität auszeichnen. Gespeichert wird die "fühlbare" bzw. "sensible" Wärme. Höhere Energiedichten erreicht man, wenn das Speichermedium innerhalb der Temperaturspreizung zwischen Ladung und Entladung einen Aggregatwechsel durchläuft. Der Vorteil dieser Latentspeichermedien ist die geringe Erhöhung der Speichertemperatur bei gleichzeitig hoher Wärmeaufnahme. Bei sensibler und latenter Wärmespeicherung ist jedoch für eine Langzeitspeicherung eine Dämmung des Speichers nötig.

Bei thermochemischen Speichern ist die gespeicherte Wärme nicht fühlbar. Geeignete reversible Reaktionen im Niedertemperaturbereich sind unter anderem Sorptionsprozesse, wie etwa die Absorption bzw. Adsorption eines Arbeitsmittels durch einen Feststoff. Beladen wird ein solcher Sorptionsspeicher, indem durch Wärmezufuhr einem thermochemischen Speichermedium eine verflüchtigbare Substanz, beispielsweise Wasser, entzogen wird. Zu diesem Zweck kann beispielsweise ein heißer, trockener Gasstrom dem Speichermedium zugeführt werden, wobei das bei der Beladung durch Desorption ausgetriebene Wasser von dem heißen, trockenen Gasstrom aufgenommen wird und mit diesem den Speicher verlässt. Der so abgekühlte, feuchte Gasstrom wird zumeist der Umwelt zugeführt. Um Sorptionswärme zu einem späteren Zeitpunkt freizusetzen, wird dem beladenen Speichermedium Wasserdampf zugeführt, wobei bei der Anlagerung von Wasserdampf an das Sorptionsmaterial Bindungsenergie in Form von Wärme freigesetzt wird.

Darüber hinaus sind thermochemische Speichermaterialien bekannt, bei denen es unter Wärmezufuhr zum Speichermaterial aufgrund einer chemischen Reaktion zur Freisetzung einer Substanz kommt (Beladung). Wird diese Substanz dem beladenen Speichermaterial später zugeführt, kommt es aufgrund der umgekehrt stattfindenden chemischen Reaktion zur Freisetzung von Reaktionswärme (Entladung). Beispielsweise sind aus dem Stand der Technik thermochemische Speichermaterialien bekannt, bei denen es unter Wärmezufuhr zu einer Zersetzungsreaktion und der Bildung von wenigstens einem Zersetzungsprodukt und einer (verflüchtigbaren) Substanz kommt. Wird dem Zersetzungsprodukt später die Substanz wieder zugeführt, wird Reaktionswärme freigesetzt.

Werden die bekannten thermochemischen Speichermaterialien zur Erwärmung und/oder Abkühlung eines Arbeitsfluides eingesetzt, wobei das Arbeitsfluid das thermochemische Speichermedium durchströmt, wird bei der Beladung des Wärmespeicher-Mediums die freigesetzte Substanz vom Arbeitsfluid aufgenommen, wobei es aufgrund der Konzentration und/oder der Anwesenheit der freigesetzten Substanz in dem Arbeitsfluid zu Problemen kommen kann. Wird beispielsweise Wasser bei einem Desorptionsprozess oder bei einer Zerfallsreaktion freigesetzt und von dem Arbeitsfluid aufgenommen, steigt die Wasserdampfkonzentration im Arbeitsfluid an, was zu unerwünschten Kondensationserscheinungen bei der weiteren Verwendung des Arbeitsfluides führen kann. Wird die bei der Beladung freigesetzte Substanz mit einem Gasstrom an die Umgebung abgeführt, führt dies zu einem Wärmeverlust und zu einem Substanzverlust, was es erforderlich macht, die Substanz später für eine Entladung des Wärmespeicher-Mediums erneut bereitzustellen. Schließlich ist von Nachteil, dass beim Durchströmen des thermochemischen Wärmespeicher-Mediums mit dem Arbeitsfluid Fremdkörper und Partikel in das Wärmespeicher-Medium eingebracht werden können, was zu einer Zerstörung des Wärmespeicher-Mediums und/oder zu einem Abfall der Wärmespeicherleistung führen kann.

Aufgabe der vorliegenden Erfindung ist es, ein Verfahren, einen Wärmespeicher und ein Wärmespeichersystem zur Verfügung zu stellen, bei dem die vorgenannten Nachteile nicht auftreten. Im Übrigen ist es Aufgabe der vorliegenden Erfindung, ein Verfahren, einen Wärmespeicher und ein Wärmespeichersystem jeweils der eingangs genannten Art zur Verfügung zu stellen, die eine Verwendung in neuen Anwendungsbereichen in einfacher Weise und mit hoher Effizienz der Wärmespeicherung ermöglichen.

Die vorgenannten Aufgaben sind bei einem Verfahren mit den Merkmalen des Anspruchs 1. gelöst.

Dementsprechend weist der erfindungsgemäße Wärmespeicher einen Durchströmungsbereich für ein Arbeitsfluid und einen wenigstens ein Wärmespeicher-Medium aufweisenden Speicherbereich auf, wobei der Durchströmungsbereich stofflich vom Speicherbereich getrennt ist, so dass das Arbeitsfluid beim Durchströmen kontaktlos zum Wärmespeicher-Medium geführt ist, und wobei der Durchströmungsbereich und der Speicherbereich derart miteinander verbunden sind, dass eine Wärmeübertragung zwischen dem Arbeitsfluid und dem Wärmespeicher-Medium bei Beladung und Entladung des Wärmespeicher-Mediums möglich ist.

Der Erfindung liegt an dieser Stelle der Grundgedanke zugrunde, eine indirekte Wärmeübertragung zwischen dem Arbeitsfluid und dem thermochemischen Wärmespeicher-Medium bei der Beladung bzw. Entladung des Wärmespeicher-Mediums vorzusehen, wobei die bei der Beladung erforderliche Wärmezufuhr zur Abkühlung des Arbeitsfluides und die bei der Entladung des Wärmespeicher-Mediums freigesetzte Sorptionswärme oder Reaktionswärme zur Erwärmung des Arbeitsfluides führt. Durch die stoffliche Trennung des Arbeitsfluides von dem Wärmespeicher-Medium kommt es insbesondere bei der Beladung des Wärmespeicher-Mediums nicht zur Aufnahme der vom Wärmespeicher-Medium freigesetzten Substanz durch das Arbeitsfluid, was insbesondere bei solchen Arbeitsfluiden von Vorteil ist, deren Zusammensetzung bestimmten Anforderungen genügen muss. Wird beispielsweise als (verflüchtigbare) Substanz Wasser bei der Beladung des Wärmespeicher-Mediums freigesetzt, kommt es bei dem erfindungsgemäßen Verfahren nicht zu einem Anstieg der Wasserdampfkonzentration im Arbeitsfluid. Dies ist insbesondere dann von Vorteil, wenn eine hohe Wasserdampfbeladung im Arbeitsfluid zu Nachteilen führen kann, beispielsweise aufgrund der Bildung von Kondenswasser bei der weiteren Verwendung des Arbeitsfluides. Durch die stoffliche Trennung des Arbeitsfluides von dem Wärmespeicher-Medium wird sichergestellt, dass mit dem Arbeitsfluid keine störenden oder die Wärmespeicherleistung beeinträchtigenden Substanzen und/oder Partikel in das Wärmespeicher-Medium eingebracht werden können. Im Übrigen lassen sich aufgrund der Trennung zwischen dem Arbeitsfluid und dem Wärmespeicher-Medium unterschiedliche Druckniveaus im Durchströmungsbereich für das Arbeitsfluid einerseits und im Speicherbereich für das Wärmespeicher-Medium andererseits einstellen, was eine vorteilhafte Weiterbildung der Erfindung zulässt. Hierauf wird nachfolgend noch im Einzelnen eingegangen.

Ein weiterer Aspekt der vorliegenden Erfindung betrifft die Verwendung des erfindungsgemäßen Verfahrens, Wärmespeichers und Wärmespeichersystems zur Erwärmung oder Abkühlung von Druckluft für Druckluftspeicherkraftwerke. Diesem Aspekt kommt eigenerfinderische Bedeutung zu. Bei den aus dem Stand der Technik bekannten Druckluftspeicherkraftwerken wird die bei der Beladung von Kavernenspeichern durch Luftkompression entstehende Wärme abgeführt und wird anschließend bei der Entladung durch Verbrennung fossiler Brennstoffe wieder zugeführt (diabate Druckluftspeicherung). Bisherige Ansätze zur Speicherung der bei der Kompression entstehenden und zur Entspannung wiederum benötigten Wärme (adiabate Druckluftspeicherung) basieren auf der Nutzung sensibler Wärmespeicherung, insbesondere unter Verwendung von Beton, Keramik oder vergleichbaren hochtemperaturfesten Materialien als Wärmespeicher-Medium, so wie in der EP 1 857 614 A2 beschrieben. Aufgrund der Charakteristik sensibler Wärmespeicherung sind hohe Temperaturen und/oder große Speichervolumina erforderlich, die im Zusammenhang mit dem hohen Druckniveau der Druckluftspeicherung von bis zu 80 bar Probleme mit der Kompressorentechnik und/oder mit der Wärmespeicherung hervorrufen können.

Durch den erfindungsgemäßen Einsatz von thermochemischen Wärmespeichern kann die Menge des notwendigen Wärmespeichermaterials verringert werden, was zu geringeren konstruktiven Anforderungen an die Druckfestigkeit sowie zu niedrigeren Kosten im Zusammenhang mit der Wärmespeicherung führt.

Insbesondere im Zusammenhang mit der Verwendung von Wärmespeichermedien, die bei der Beladung Wasser als verflüchtigbare Substanz freisetzen, zur Erwärmung und Abkühlung von Druckluft für Druckluftspeicherkraftwerke ist die erfindungsgemäße Lösung von Vorteil. Durch die stoffliche Trennung von Arbeitsfluid und Wärmespeicher-Medium bleibt die Wasserdampfkonzentration im Arbeitsfluid bei der Beladung des Wärmespeicher-Mediums konstant, wobei das beim Beladen freigesetzte Wasser beispielsweise über einen anderen Gasstrom oder in sonstiger Weise aus dem Speicherbereich des Wärmespeichers abgeführt wird. Grundsätzlich könnte beispielsweise freigesetzter Wasserdampf auch aus dem Speicherbereich abgesaugt werden. Wird statt dessen ein thermochemisches Wärmespeichersystem verwendet, bei dem das Arbeitsfluid die verflüchtigbare Substanz (Wasser) aufnimmt, kommt es zu einer (verstärkten) Kondensation von gasförmigem Wasser an den Speicherwandungen und im Speicher (Kaverne), wobei dem Energiespeicherkreislauf Kondensationswärme entzogen wird, was den Wirkungsgrad der Wärmespeicherung verringert. Des Weiteren führt das sich an den Wandungen niederschlagende Wasser zu einem unkontrollierbaren Lösungsprozess, der einer Sohlung gleichkommt. Die Restwassermengen im Sumpf vergrößern sich kontinuierlich und machen ein regelmäßiges Abpumpen erforderlich.

Bei einer bevorzugten Ausführungsform des erfindungsgemäßen Verfahrens ist vorgesehen, dass die bei der Beladung des Wärmespeicher-Mediums freigesetzte und aus dem Wärmespeicher abgeführte Substanz gespeichert und für die Entladung des Wärmespeicher-Mediums einem Speicher entnommen und zum Wärmespeicher rezykliert wird. Die Bereitstellung und Zufuhr der Substanz für eine Entladung des Wärmespeicher-Mediums von außen ist somit grundsätzlich nicht notwendig, kann jedoch zum Ausgleich von Substanzverlusten, die im Wärmespeichersystem auftreten können, vorgesehen sein.

Um die bei der Beladung des Wärmespeicher-Mediums freigesetzte Substanz aus dem Wärmespeicher abführen zu können und/oder die Substanz für eine Entladung des Wärmespeicher-Mediums dem Wärmespeicher (wieder) zuzuführen, kann ein Hilfsfluid, insbesondere ein Gasstrom, weiter insbesondere ein Luftstrom, eingesetzt werden, wobei das Hilfsfluid den Wärmespeicher durchströmt und dabei mit dem Wärmespeicher-Medium und/oder mit dem Reaktionsprodukt des Wärmespeicher-Mediums, das bei der Beladung des Wärmespeicher-Mediums gebildet wird, in Kontakt gebracht wird. Dadurch wird die Abfuhr und die Zufuhr der Substanz vom bzw. zum Speicherbereich des Wärmespeichers vereinfacht. In diesem Zusammenhang ist weiter von Vorteil, das Hilfsfluid in einem vom Strömungsweg des Arbeitsfluides stofflich getrennten und vorzugsweise geschlossenen Kreislauf zu führen. Durch die stoffliche Trennung zwischen Hilfsfluid und Arbeitsfluid kann der Übergang der freigesetzten Substanz in das Arbeitsfluid sicher ausgeschlossen werden. Durch einen geschlossenen Kreislauf ist es möglich, die Substanz zu rezyklieren, wobei die bei der Beladung des Wärmespeicher-Mediums durch das Hilfsfluid transportierte Substanz zunächst vom Hilfsfluid abgetrennt und zur Verwendung bei der Entladung des Wärmespeicher-Mediums gespeichert werden kann. Im Zusammenhang mit der Entladung des Wärmespeicher-Mediums wird die Substanz dann dem Substanzspeicher entnommen und dem Hilfsfluid zugesetzt, das für den Transport der Substanz zu dem Wärmespeicher-Medium bzw. zu einem bei der Beladung gebildeten Reaktionsprodukt des Wärmespeicher-Mediums dient.

Es versteht sich, dass das Hilfsfluid vorzugsweise nicht mit der freigesetzten Substanz reagiert, was die Abtrennung der Substanz vereinfacht.

Die bei der Beladung des Wärmespeicher-Mediums freigesetzte Substanz kann durch Phasenumwandlung vom Hilfsfluid abgetrennt werden, wobei, vorzugsweise, die bei der Phasenumwandlung freigesetzte Energie zumindest teilweise gespeichert und für eine erneute Phasenumwandlung der Substanz zur Verwendung der Substanz bei der Entladung des Wärmespeicher-Mediums genutzt werden kann. Wird bei der Beladung als (verflüchtigbare) Substanz Wasser bzw. Wasserdampf des Wärmespeicher-Mediums freigesetzt, lässt sich dieses bzw. dieser aus dem Hilfsfluid durch Kondensation in einfacher Weise abscheiden. Die Kondensationswärme kann dabei in einem weiteren Wärmespeicher, wobei beispielsweise ein Latentwärmespeicher, ein weiterer thermochemischer Speicher oder auch ein sensibler Wärmespeicher vorgesehen sein können, gespeichert. Für die Entladung des Wärmespeicher-Mediums wird dann das kondensierte Wasser verdampft und dem Hilfsfluid wieder zugeführt, wobei die gespeicherte Kondensationswärme zur Verdampfung genutzt wird. Durch den Transport des dampfförmigen Wassers zwischen dem Wärmespeicher und dem Kondensator bzw. Phasenumwandler des Wärmespeichersystems in einem geschlossenen Kreislauf können Wärmeverluste durch Abgabe des Wasserdampfes an die Umgebung ausgeschlossen werden.

Die freigesetzte Substanz wird zusammen mit dem Hilfsfluid vorzugsweise in einem geschlossenen Kreislauf geführt. Die Erfindung lässt es jedoch ohne weiteres zu, zum Ausgleich von Substanzverlusten die Substanz in der benötigten Menge dem (geschlossenen) Kreislauf des Hilfsfluides zuzuführen.

Die Kreislaufführung des Hilfsfluides ist insbesondere dann von Vorteil, wenn das erfindungsgemäße Verfahren und der Wärmespeicher zur Erwärmung oder zur Abkühlung von Druckluft von Druckluftspeicherkraftwerken eingesetzt werden. Wird nämlich im Gegensatz zu der erfindungsgemäßen Lösung bei der Beladung des Wärmespeicher-Mediums freigesetzter Wasserdampf von dem Arbeitsfluid aufgenommen, reicht die Luftfeuchtigkeit der eingespeicherten Luft nach Auskondensation von Wasser im Kavernenspeicher bei der Entladung in der Regel nicht mehr aus, um die gespeicherte Wärmeleistung (vollständig) freizusetzen. Als Folge ist der eingespeicherten Luft vor dem Eintritt in den Wärmespeicher für eine Entladung des Wärmespeicher-Mediums Wasserdampf zuzusetzen. Der Wasserdampf muss durch Einsatz von Wärmeenergie erzeugt werden, was den Wirkungsgrad der Wärmespeicherung verschlechtert. Beim Einspritzen von Wasser durch Injektoren in den Wärmespeicher kann es zudem zu einer Zerstörung des Wärmespeicher-Mediums kommen. Diese Nachteile treten bei der erfindungsgemäß vorgesehenen Kreislaufführung des Hilfsfluids nicht auf, wobei eine ausreichende Menge der verflüchtigbaren Substanz im Hilfsfluid-Kreislauf umläuft bzw. für eine Entladung des Wärmespeicher-Mediums einem Speicher des Kreislaufs entnommen und dem Hilfsfluid vor dem Eintritt in den Wärmespeicher wieder zugeführt wird.

Unter dem Begriff "thermochemisches Wärmespeicher-Medium" sind solche Wärmespeichermaterialien zu verstehen, bei denen es durch Wärmezufuhr aufgrund eines Desorptionsprozesses und/oder wenigstens einer chemischen Reaktion, insbesondere einer Zersetzungsreaktion, zur Freisetzung von Wasser und/oder von wenigstens einer Substanz kommt. Das endotherme Austreiben der Substanz durch einen Desorptionsprozess und/oder eine chemische Reaktion ist als "Beladung des Wärmespeicher-Mediums" im Sinne der Erfindung zu verstehen. Zur Entladung des Wärmespeicher-Mediums bzw. zur Freisetzung von Sorptionswärme und/oder von Reaktionswärme ist es erforderlich, dass die verflüchtigte bzw. abgetrennte Substanz dem Sorptionsmittel bzw. dem bei der chemischen Reaktion gebildeten Reaktionsprodukt wieder zugeführt wird. Sorptionsmittel können aus der Gruppe der Zeolithe und/oder der Silikagele ausgewählt werden. Darüber hinaus können solche Wärmespeichermedien eingesetzt werden, bei denen es aufgrund von Zersetzungsreaktionen, beispielsweise der Zersetzung von Metallhydroxiden, insbesondere von Calciumhydroxid und/oder Magnesiumhydroxid, sowie durch Zersetzung von Metallhydriden, insbesondere Magnesiumhydrid, zur Wärmefreisetzung bei der Beladung kommt. Darüber hinaus sind weitere chemische Reaktionen möglich und dem Fachmann bekannt, die unter Zufuhr von Wärmeenergie eine Substanz freisetzen (Beladung) und bei der späteren Entladung unter Zufuhr der Substanz Sorptions- und/oder Reaktionswärme erzeugen.

Insbesondere sollen im Zusammenhang mit der Erfindung solche Wärmespeichermedien zum Einsatz kommen, bei denen während der Beladung des Wärmespeicher-Mediums Wasser aufgrund einer Desorption bzw. als Reaktionsprodukt insbesondere aufgrund einer Zersetzungsreaktion freigesetzt wird. Insbesondere hat sich im Zusammenhang mit der Erfindung gezeigt, dass eine Mischung von unterschiedlichen Wärmespeichermedien vorteilhaft sein kann. In diesem Zusammenhang ist eine Verwendung eines Mischspeichers, bei dem Zeolith als Trägermaterial für Magnesiumoxid genutzt wird, möglich. Es versteht sich, dass die vorgenannte Aufzählung nicht abschließend ist. Insbesondere können auch andere Wärmespeichermedien, bei denen es während der Entladung zur Freisetzung von Sorptionswärme kommt, mit solchen Wärmespeichermedien zusammen eingesetzt werden, die bei der Entladung Reaktionswärme freisetzen.

Um das Austreiben der verflüchtigbaren Substanz bei der Beladung des Wärmespeicher-Mediums zu unterstützen, ist gemäß der Erfindung vorgesehen, das Druckniveau im Wärmespeicher bzw. im Speicherbereich für das Wärmespeicher-Medium bei der Beladung abzusenken. Dadurch können Desorptionsprozesse bei der Beladung des Wärmespeicher-Mediums gefördert werden. Gleiches gilt für den Fall, dass es bei der Beladung des Wärmespeicher-Mediums zu einer Zersetzungsreaktion kommt. Insbesondere ist in diesem Zusammenhang vorgesehen, dass das Druckniveau im Bereich des Wärmespeicher-Mediums bei der Beladung des Wärmespeicher-Mediums gegenüber dem Umgebungsdruck abgesenkt wird. Weiter ist vorgesehen, dass das Druckniveau bei der Entladung des Wärmespeicher-Mediums zur Unterstützung der ablaufenden Prozesse bzw. Reaktionen erhöht wird.

Vorzugsweise werden solche Wärmespeichermedien eingesetzt, die durch Desorption oder Zersetzungsreaktion Wasser als verflüchtigbare Substanz bei der Beladung freisetzen, was insbesondere das Abscheiden der verflüchtigbaren Substanz aus einem Hilfsfluid erleichtert. Hier kann die verflüchtigbare Substanz durch Kondensation von dem Hilfsfluid abgetrennt und durch Verdampfung dem Hilfsfluid wieder zugeführt werden. Um das Auskondensieren zu fördern, kann die Kondensation auf einem gegenüber dem Druckniveau im Wärmespeicher (bzw. im Speicherbereich für das Wärmespeicher-Medium) erhöhten Druckniveau des Hilfsfluides und die Verdampfung auf einem gegenüber dem Druckniveau im Wärmespeicher verringerten Druckniveau des Hilfsfluides erfolgen.

Bei einer besonders einfachen Ausführungsform des erfindungsgemäßen Verfahrens kann vorgesehen sein, dass die Strömungsrichtung des Hilfsfluides beim Wechsel zwischen Beladung und Entladung des Wärmespeicher-Mediums invertiert wird. Dadurch lassen sich unterschiedliche Druckniveaus im Speicherbereich des Wärmespeichers für das Wärmespeicher-Medium einerseits und in einem dem Wärmespeicher nachgeschalteten Kondensator/Verdampfer als Phasenumwandler andererseits bei geringem apparativen Aufwand einstellen.

Um eine stärkere Abkühlung des Arbeitsfluides bei der Beladung des Wärmespeicher-Mediums zu gewährleisten, kann eine Vor- oder Nachkühlung des Arbeitsfluides vor bzw. nach dem Durchströmen des thermochemischen Wärmespeichers vorgesehen sein. Bei der Entladung des Wärmespeicher-Mediums kann dementsprechend eine Vor- oder Nacherwärmung des Arbeitsfluides vorgesehen sein, um das Temperaturniveau des Arbeitsfluides stärker anzuheben. Zu diesem Zweck kann wenigstens ein weiterer Wärmespeicher bzw. Wärmeübertrager, vorzugsweise ein Latentwärmespeicher oder ein sensibler Wärmespeicher, dem thermochemischen Wärmespeicher vor- oder nachgeschaltet sein. Es versteht sich, dass die vor- oder nachgeschalteten Wärmespeicher oder Wärmeübertrager auf einem anderen Temperaturniveau arbeiten als der thermochemische Wärmespeicher.

Die vorgenannten Aspekte und Merkmale der vorliegenden Erfindung sowie die nachfolgend anhand der Zeichnung beschriebenen Aspekte und Merkmale der vorliegenden Erfindung können unabhängig voneinander, in einer beliebiger Kombination, aber auch jeweils im Zusammenhang mit den Oberbegriffsmerkmalen von wenigstens einem Hauptanspruch der vorliegenden Erfindung realisiert werden, auch wenn dies nicht im einzelnen beschrieben ist. Hier kann jedem beschriebenen Merkmal oder Aspekt eigenerfinderische Bedeutung zukommen. Eine beliebige Kombination der Merkmale der Unteransprüche mit den Oberbegriffsmerkmalen von wenigstens einem Hauptanspruch ist ebenfalls möglich, auch wenn dies nicht ausdrücklich erwähnt ist. Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigen:
- Fig. 1: eine schematische Darstellung eines erfindungsgemäßen Wärmespeichersystems mit einem thermochemischen Wärmespeicher bei der Beladung eines thermochemischen Wärmespeicher-Mediums und
- Fig. 2: das in Fig. 1 dargestellte Wärmespeichersystem bei der Entladung des Wärmespeicher-Mediums.

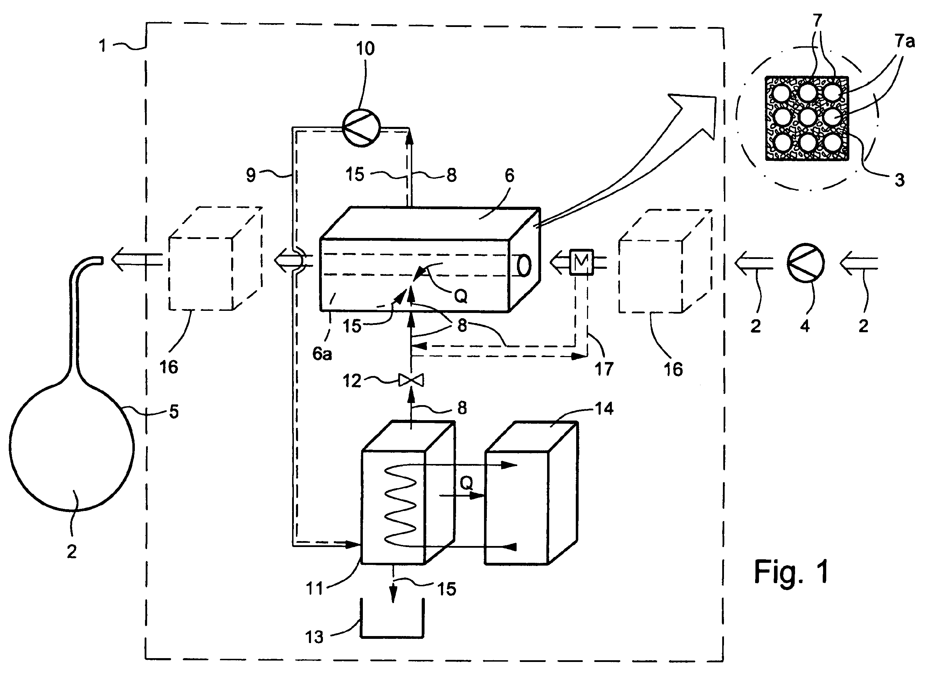

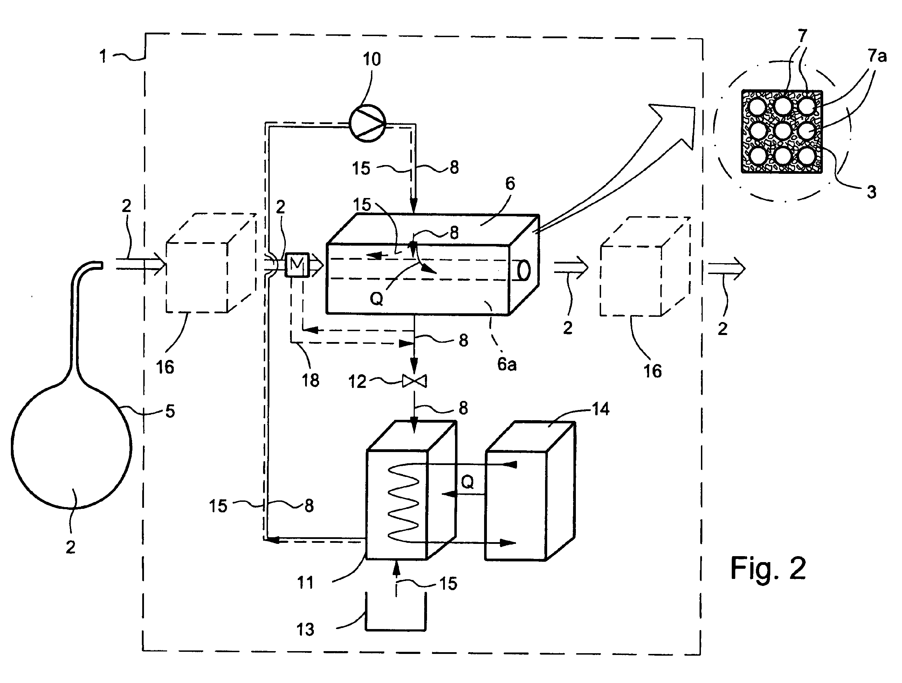

In den Fig. 1 und 2 ist ein Wärmespeichersystem 1 zur Erwärmung oder Abkühlung eines Arbeitsfluides 2 unter Verwendung von wenigstens einem thermochemischen Wärmespeicher-Medium 3 dargestellt. Bei dem Arbeitsfluid 2 handelt es sich um Luft, die mit einem Kompressor 4 verdichtet und in einer Kaverne 5 als Druckluft gespeichert wird. Die Druckluft wird für die Energiespeicherung bei einem nicht im Einzelnen dargestellten Druckluftspeicherkraftwerk genutzt. Es versteht sich, dass die nachfolgenden Ausführungen zu dem Aufbau und zur Betriebsweise des Wärmespeichersystems 1 nicht auf die Abkühlung oder Erwärmung von Druckluft zur Speicherung von Energie in Druckluftspeicherkraftwerken beschränkt ist.

Bei der dargestellten Ausführungsform ist das Wärmespeichersystem 1 vorgesehen, um das durch Kompression erwärmte Arbeitsfluid 2 vor der Speicherung in der Kaverne 5 abzukühlen, wobei die dabei abzuführende Wärmeenergie Q in einem Wärmespeicher 6 gespeichert werden soll. Der Wärmespeicher 6 weist ein Register aus Strömungsrohren 7 für das Arbeitsfluid 2 auf, die einen Durchströmungsbereich 7a für das Arbeitsfluid 2 bilden. Die Strömungsrohre 7 sind in ein thermochemisches Wärmespeicher-Medium 3 als dem eigentlichen Speichermaterial eingebettet, wobei das Wärmespeicher-Medium 3 in einem Speicherbereich 6a des Wärmespeichers 6 angeordnet ist. Als Wärmespeicher-Medium 3 kann ein Gemisch aus Zeolith und Magnesiumoxid eingesetzt werden. Es versteht sich, dass auch andere thermochemische Wärmespeichermedien grundsätzlich einsetzbar sind.

Der Durchströmungsbereich 7a des Wärmespeichers 6 ist stofflich vom Speicherbereich 6a getrennt, so dass eine Vermischung des Arbeitsfluides 2 mit dem Wärmespeicher-Medium 3 nicht möglich ist. Darüber hinaus sind der Durchströmungsbereich 7a und der Speicherbereich 6a derart miteinander verbunden, dass eine Wärmeübertragung zwischen dem Arbeitsfluid 2 und dem Wärmespeicher-Medium 3 bei Beladung und Entladung des Wärmespeicher-Mediums 3 möglich ist. Der Wärmespeicher 6 weist in diesem Zusammenhang einen Speicherbereich 6a auf, in dem das Wärmespeicher-Medium 3 aufgenommen ist. Der Speicherbereich 6a weist eine nicht dargestellte Zuleitung und eine Ableitung für ein Hilfsfluid 8 auf, wobei der Speicherbereich 6a vom Hilfsfluid 8 durchströmbar ist. Das Hilfsfluid 8 ist durch das Wärmespeicher-Medium 3 hindurch bzw. an dem Wärmespeicher-Medium 3 entlang geführt, so dass das Arbeitsfluid 2 beim Durchströmen des Wärmespeichers 6 kontaktlos zum Wärmespeicher-Medium 3 geführt ist und das Hilfsfluid 8 beim Durchströmen des Wärmespeichers 6 mit dem Wärmespeicher-Medium 3 in Kontakt tritt. Das Wärmespeichersystem 1 ist somit zur indirekten Wärmeübertragung zwischen dem Hilfsfluid 8 und dem Arbeitsfluid 2 ausgebildet.

Das Hilfsfluid 8 wird in einem geschlossenen Kreislauf 9 geführt. In dem Kreislauf 9 durchströmt dabei das Hilfsfluid 8 zunächst die Strömungswege durch das Wärmespeicher-Medium 3 des Wärmespeichers 6 und wird dann über einen Kompressor 10 einem Phasenumwandler 11 über eine entsprechende Leitung zugeführt. In einer Leitung zwischen dem Phasenumwandler 11 und dem Wärmespeicher 6 ist ein Druckminderer 12 vorgesehen. Darüber hinaus weist das Wärmespeichersystem 1 ein Wasserreservoir 13 bzw. einen Speicherbehälter für Kondenswasser auf. Schließlich ist ein weiterer Wärmespeicher 14 vorgesehen, der als Latentwärmespeicher oder auch als thermochemischer oder sensibler Wärmespeicher ausgebildet sein kann. Der Kreislauf 9 mit dem Wärmespeicher 6, dem Kompressor 10, dem Phasenumwandler 11 und dem Wasserreservoir 13 sowie dem Druckminderer 12 bildet ein geschlossenes System für das Hilfsfluid 8. Ein Stoffaustausch zwischen dem Hilfsfluid 8 und dem Arbeitsfluid 2 ist nicht vorgesehen. Im Übrigen ist vorzugsweise auch kein Stoffaustausch zwischen dem Hilfsfluid 8 und der Umgebung vorgesehen. Grundsätzlich kann jedoch auch die Zufuhr von Wasser aus der Umgebung bzw. einem externen Speicher in den Kreislauf 9 vorgesehen sein, um Wasserverluste auszugleichen.

Die Betriebsweise des dargestellten Wärmespeichersystems 1 wird nachfolgend erläutert. Das Arbeitsfluid 2 und das Hilfsfluid 8 durchströmen gleichzeitig den Wärmespeicher 6. Aufgrund der Temperaturdifferenz zwischen dem durch Kompression erwärmten Arbeitsfluid 2 und dem Hilfsfluid 8 wird ein Wärmestrom Q von dem Arbeitsfluid 2 über die Strömungsrohre 7 an das Wärmespeicher-Medium 3 übertragen. Dies führt zur Beladung des Wärmespeicher-Mediums 3, was in Fig. 1 dargestellt ist. Bei der Beladung des Wärmespeicher-Mediums 3 wird die Wärme des Arbeitsfluides 2 zum endothermen Austreiben von wenigstens einer verflüchtigbaren Substanz 15 aus dem Wärmespeicher-Medium 3 verwendet und die verflüchtigbare Substanz 15 dabei von dem das Wärmespeicher-Medium 3 durchströmenden Hilfsfluid 8 aufgenommen und mit dem Hilfsfluid 8 aus dem Wärmespeicher 6 transportiert. Dies ist schematisch in Fig. 1 dargestellt. Bei der verflüchtigbaren Substanz 15 handelt es sich bei dem dargestellten Ausführungsbeispiel um Wasser.

Bei der Beladung wird das Druckniveau im Speicherbereich 6a über dem Wärmespeicher-Medium 3 abgesenkt, wobei das Hilfsfluid 8 zusammen mit der verflüchtigbaren Substanz 15 mit dem Kompressor 10 aus dem Wärmespeicher 6 absaugt wird. Durch die Änderung des Wasserdampfpartialdrucks im Wärmespeicher 6 auf der Seite des Wärmespeicher-Mediums 3 kommt es zu einer schnellen Verdampfung der verflüchtigbaren Substanz 15. Das Hilfsfluid 8 wird zusammen mit der dampfförmigen Substanz 15 über den Kompressor 10 zu dem Phasenumwandler 11 geleitet, der im Kondensatorbetrieb arbeitet. Durch den Saugbetrieb des Kompressors 10 wird gleichzeitig das Druckniveau des Hilfsfluides 8 in dem Phasenumwandler 11 erhöht. Zudem kommt es zu einer Temperaturerhöhung des die Substanz 15 transportierenden Hilfsfluides 8. Im Kondensator 11 wird die Substanz 15 dann durch Kondensation von dem Hilfsfluid 8 abgetrennt, wobei die Kondensation auf einem gegenüber dem Druckniveau im Wärmespeicher 6 auf der Seite des Wärmespeicher-Mediums 3 erhöhten Druckniveau des Hilfsfluides 8 erfolgt. Das bei der Kondensation freigesetzte Wasser wird in dem Wasserreservoir 13 gespeichert. Die bei der Abkühlung des Hilfsfluides 8 im Phasenumwandler 11 freigesetzte Wärmemenge Q wird in dem Wärmespeicher 14 gespeichert.

Das Hilfsfluid 8 verlässt den Wärmespeicher 6 im Ergebnis auf einem hohen Temperaturniveau und ist wasserdampfgesättigt. Durch die anschließende Kompression kommt es zu einem weiteren Energieeintrag in das Hilfsfluid, was zu einer weiteren Temperaturerhöhung führt. Das Hilfsfluid 8 verlässt den Phasenumwandler 11 abgekühlt und weist einen geringen Wasserdampfgehalt auf.

Durch das Druckminderventil 12 kommt es zu einer Entspannung des Hilfsfluides 8 und damit zu einer weiteren Temperaturabsenkung vor der Rückführung in den Wärmespeicher 6. Durch die Zuleitung zum Wärmespeicher-Medium 3 steht das Hilfsfluid 8 dann für eine erneute Aufnahme der verflüchtigbaren Substanz 15 zur Verfügung.

Um die Temperatur des zu kühlenden Arbeitsfluides 2 weiter herabzusetzen, kann im Bedarfsfall wenigstens ein weiterer Wärmespeicher 16 dem Wärmespeicher 6 vor- oder nachgeschaltet sein. Dieser Speicher 16 arbeitet dann auf einem anderen Temperaturniveau als der Wärmespeicher 6, der den Hauptwärmespeicher darstellt. Der weitere Wärmespeicher 16 kann vorzugsweise als Latentwärmespeicher oder als sensibler Wärmespeicher ausgebildet sein. Darüber hinaus ist es grundsätzlich auch möglich, den weiteren Wärmespeicher 16 als thermochemischen Wärmespeicher auszubilden, wobei ein anderes Wärmespeicher-Medium als im Wärmespeicher 6 eingesetzt werden kann.

Darüber hinaus ist es möglich, dass trockene abgekühlte Hilfsgas 8 zur Vorkühlung des Arbeitsfluides 2 einzusetzen, was in Fig. 1 schematisch durch die Strichlinie 17 dargestellt ist.

In Fig. 2 ist nun die Entladung des Wärmespeicher-Mediums 3 schematisch dargestellt. Zu entspannendes und zu erwärmendes Arbeitsfluid 2 wird aus der Kaverne 5 durch die Strömungsrohre 7 des Wärmespeichers 6 geleitet. Dabei arbeitet der Kompressor 10 im Druckbetrieb, wobei es zu einer Partialdruckänderung im Phasenumwandler 11 einerseits und im Wärmespeicher 6 andererseits kommt. Die im Wärmespeicher 14 gespeicherte Kondensationsenergie Q führt zusammen mit der Druckreduzierung im Phasenumwandler 11 zu einer Verdampfung des aus dem Wasserreservoir 13 entnommenen Wassers als verflüchtigbare Substanz 15. Der erzeugte Wasserdampf wird mit dem Hilfsfluid 8 durch den Kompressor 10 verdichtet und dem Wärmespeicher-Medium 3 unter Druck zugeführt. Unter Wärmeübertragung an das Arbeitsfluid 2 wird die verflüchtigbare Substanz 15 exotherm mit dem Wärmespeicher-Medium 3 vereinigt. Bei der Entladung des Wärmespeicher-Mediums 3 kommt es somit aufgrund von Sorptionsprozessen und der Bildung von Magnesiumhydroxid zur Freisetzung von Sorptionswärme und von Reaktionswärme, die an das Arbeitsfluid 2 übertragen werden. Die Übertragung des Wärmestroms Q führt zu einer Temperaturerhöhung des Arbeitsfluides 2 beim Durchströmen des Wärmespeichers 6.

Nach der Abtrennung der verflüchtigbaren Substanz 15 aus dem Hilfsgas 8 gelangt dieses trocken und heiß bzw. warm zum Druckminderer 12, wird entspannt und kühlt dabei ab. Im Phasenumwandler 11, der nun im Verdampferbetrieb arbeitet, wird erneut Wasserdampf aufgenommen, bis die Entladung des Wärmespeicher-Mediums 3 vollständig erfolgt ist bzw. die Adsorption des Wassers am Wärmespeicher-Medium 3 und/oder die Bildungsreaktion von Magnesiumhydroxid zum Erliegen kommt.

Um die Temperatur des Arbeitsfluides 2 stärker heraufzusetzen, kann im Bedarfsfall wiederum ein weiterer Wärmespeicher 16, der als thermochemischer Wärmespeicher, als Latentwärmespeicher oder als sensibler Wärmespeicher ausgebildet sein kann, dem Wärmespeicher 6 als Hauptwärmespeicher des Wärmespeichersystems 1 vor- und/oder nachgeschaltet sein. Der weitere Wärmespeicher 16 arbeitet dann entsprechend auf einem anderen Temperaturniveau als der Wärmespeicher 6. Wie in Fig. 2 dargestellt, kann gegebenenfalls eine Vorwärmung des Arbeitsfluides 2 vor dem Einströmen in den Wärmespeicher 6 mit dem trockenen und warmen Hilfsgas 8 vorgesehen sein, was durch die Strichlinie 18 in Fig. 2 schematisch dargestellt ist.

Das Wärmespeichersystem 1 ermöglicht es, die bei der Entladung des Wärmespeicher-Mediums 3 freigesetzte Wärmeenergie Q nahezu verlustfrei zu speichern und zeitlich versetzt wieder verfügbar zu machen. Die Speicherleistung des Wärmespeichersystems 1 für Wärmeenergie Q ist bedarfsweise anpassbar, so dass auch eine Anwendung im Bereich der Fernwärmenutzung und/oder für Druckluftspeicherkraftwerke möglich ist. Durch eine entsprechende Wahl des Speichermediums 3 lassen sich die Speicherkapazität und die nutzbaren Temperaturbereiche einstellen. Durch die Verwendung eines Hilfsfluides 8 zum Transport der verflüchtigbaren Substanz 15 ist eine Anreicherung der verflüchtigbaren Substanz 15 in dem Arbeitsfluid 2 ausgeschlossen. Im Übrigen kann es durch die Trennung des Arbeitsfluides 2 von dem Wärmespeicher-Medium 3 auch nicht zu einer Störung oder Beeinträchtigung der Speicherfähigkeit des Wärmespeicher-Mediums 3 durch Störstoffe im Arbeitsfluid 2 kommen. Durch die Führung des Hilfsfluides 8 in einem geschlossenen Kreislauf kann ein Verlust von Wärme Q bei der Kondensation der verflüchtigbaren Substanz 15 aus dem Hilfsfluid 8 nahezu vollständig ausgeschlossen werden, wobei die Kondensationswärme Q in dem Wärmespeicher 14 zwischengespeichert und für die spätere Verdampfung der verflüchtigbaren Substanz 15 wieder genutzt werden kann. Dies trägt zu einem hohen Gesamtwirkungsgrad der Wärmespeicherung mit dem.beschriebenen Wärmespeichersystem 1 bei.

## Patentansprüche

1. Verfahren zur Erwärmung und Abkühlung eines Arbeitsfluides (2) unter Verwendung von wenigstens einem thermochemischen Wärmespeicher-Medium (3), wobei das Arbeitsfluid (2) durch wenigstens einen das Wärmespeicher-Medium (3) aufweisenden thermochemischen Wärmespeicher (6) geführt wird, wobei das Arbeitsfluid (2) kontaktlos zum Wärmespeicher-Medium (3) geführt wird, wobei bei einer Beladung des Wärmespeicher-Mediums (3) ein Wärmestrom (Q) vom Arbeitsfluid (2) an das Wärmespeicher-Medium (3) übertragen und wenigstens eine Substanz (15) von dem Wärmespeicher-Medium (3) freigesetzt und aus dem Wärmespeicher (6) abgeführt wird und wobei bei einer Entladung des Wärmespeicher-Mediums (3) die Substanz (15) unter Wärmefreisetzung dem Wärmespeicher-Medium (3) oder wenigstens einem bei der Beladung des Wärmespeicher-Mediums (3) erzeugten Reaktionsprodukt des Wärmespeicher-Mediums (3) zugeführt und ein Wärmestrom (Q) an das Arbeitsfluid (2) übertragen wird
**dadurch gekennzeichnet, dass**
die Beladung des Wärmespeicher-Mediums (3) auf einem verringerten Druckniveau und die Entladung des Wärmespeicher-Mediums (3) auf einem höheren Druckniveau durchgeführt wird.

2. Verfahren nach Anspruch 1, **dadurch gekennzeichnet, dass** die bei der Beladung des Wärmespeicher-Mediums (3) aus dem Wärmespeicher (6) abgeführte Substanz (15) gespeichert und für die Entladung des Wärmespeicher-Mediums (3) zum Wärmespeicher (6) rezykliert wird.

3. Verfahren nach Anspruch 1 oder 2, **dadurch gekennzeichnet, dass** ein Hilfsfluid (8) zum Transport der Substanz (15) aus dem Wärmespeicher (6) und/oder zum Wärmespeicher (6) verwendet wird, wobei das Hilfsfluid (8) den Wärmespeicher (6) durchströmt und dabei mit dem Wärmespeicher-Medium (3) und/oder mit dem Reaktionsprodukt des Wärmespeicher-Mediums (3) in Kontakt gebracht wird.

4. Verfahren nach einem der vorhergehenden Ansprüche, **dadurch gekennzeichnet, dass** das Hilfsfluid (8) in einem vom Strömungsweg des Arbeitsfluides (2) stofflich getrennten und vorzugsweise geschlossenen Kreislauf (9) geführt wird, wobei die bei der Beladung des Wärmespeicher-Mediums (3) durch das Hilfsfluid (8) transportierte Substanz (15) vom Hilfsfluid (8) abgetrennt und zur Verwendung bei der Entladung des Wärmespeicher-Mediums (3) gespeichert wird.

5. Verfahren nach einem der vorhergehenden Ansprüche, **dadurch gekennzeichnet, dass** die bei der Beladung des Wärmespeicher-Mediums (3) freigesetzte Substanz (15) durch Phasenumwandlung vom Hilfsfluid (8) abgetrennt wird und dass, vorzugsweise, die bei der Phasenumwandlung freigesetzte Wärmeenergie (Q) zumindest teilweise gespeichert und für eine erneute Phasenumwandlung der Substanz (15) zur Verwendung der Substanz (15) bei der Entladung des Wärmespeicher-Mediums (3) genutzt wird.

6. Verfahren nach einem der vorhergehenden Ansprüche, **dadurch gekennzeichnet, dass** die Strömungsrichtung des Hilfsfluides (8) beim Wechsel zwischen Beladung des Wärmespeicher-Mediums (3) und Entladung des Wärmespeicher-Mediums (3) invertiert wird.

7. Wärmespeicher (6) ausgebildet zur Durchführung eines Verfahren nach einem der vorhergehenden Ansprüche 1 bis 6, mit einem Durchströmungsbereich (7a) für ein Arbeitsfluid (2) und einem wenigstens ein Wärmespeicher-Medium (3) aufweisenden Speicherbereich (6a), wobei der Durchströmungsbereich (7a) stofflich vom Speicherbereich (6a) getrennt ist, so dass das Arbeitsfluid (2) beim Durchströmen kontaktlos zum Wärmespeicher-Medium (3) geführt ist, und wobei der Durchströmungsbereich (7a) und der Speicherbereich (6a) derart miteinander verbunden sind, dass eine Wärmeübertragung zwischen dem Arbeitsfluid (2) und dem Wärmespeicher-Medium (3) bei Beladung und Entladung des Wärmespeicher-Mediums (3) möglich ist.

8. Wärmespeicher nach Anspruch 7, **dadurch gekennzeichnet, dass** der Speicherbereich (6a) eine Zuleitung und eine Ableitung für ein Hilfsfluid (8) aufweist, wobei der Speicherbereich (6a) vom Hilfsfluid (8) durchströmbar ist.

9. Wärmespeichersystem (1) ausgebildet zur Durchführung eines Verfahren nach einem der vorhergehenden Ansprüche 1 bis 6, mit einem Wärmespeicher (6) nach einem der vorhergehenden Ansprüche 7 oder 8, einem Kompressor (10), einem Phasenumwandler (11) und, vorzugsweise, einem Druckminderer (12), wobei der Wärmespeicher (6), der Kompressor (10), der Phasenumwandler (11) und, vorzugsweise, der Druckminderer (12), über eine geschlossene Kreislaufleitung für ein Hilfsfluid (8) miteinander verbunden sind.

## Claims

1. A method for heating and cooling a working fluid (2) using at least one thermochemical heat accumulator medium (3), wherein the working fluid (2) is guided through at least one thermochemical heat accumulator (6) comprising heat accumulator medium (3), the working fluid (2) being guided without contact to heat accumulator medium (3), wherein upon charging of heat accumulator medium (3) a heat flow (Q) is transferred from working fluid (2) to heat accumulator medium (3) and at least one substance (15) is released from heat accumulator medium (3) and conveyed away from heat accumulator (6), and wherein upon discharging of heat accumulator medium (3) substance (15) is fed, releasing heat, to heat accumulator medium (3) or at least to a reaction product of heat accumulator medium (3) that was produced during charging of heat accumulator medium (3), and a heat flow (Q) is transferred to working fluid (2)
**characterized in that**
the charging of heat accumulator medium (3) is performed at a reduced pressure level and that the discharging of heat accumulator medium (3) is performed at a higher pressure level.

2. The method according to claim 1, **characterized in that** substance (15) discharged from heat accumulator (6) during the charging of heat accumulator medium (3) is accumulated and recycled to heat accumulator (6) for discharging of heat accumulator medium (3).

3. The method according to claim 1 or 2, **characterized in that** an auxiliary fluid (8) is used for the transport of substance (15) out of heat accumulator (6) and/or to heat accumulator (6), the auxiliary fluid (8) flowing through the heat accumulator (6) and at the same time being brought in contact with heat accumulator medium (3) and/or with the reaction product of heat accumulator medium (3).

4. The method according to one of the previous claims, **characterized in that** the auxiliary fluid (8) is conveyed in a cycle (9) that is materially separated from the flow path of working fluid (2) and that is preferably closed, the substance (15) transported during the charging of heat accumulator medium (3) through auxiliary fluid (8) being separated from auxiliary fluid (8) and accumulated for use during the discharging of heat accumulator medium (3).

5. The method according to one of the previous claims, **characterized in that** the substance (15) released during the charging of heat accumulator medium (3) is separated from auxiliary fluid (8) through phase conversion and that, preferably, the heat energy (Q) released during phase conversion is accumulated at least partially and is used for a new phase conversion of substance (15) for use of substance (15) during the discharging of heat accumulator medium (3).

6. The method according to one of the previous claims, **characterized in that** the flow direction of auxiliary fluid (8) during the switch between the charging of heat accumulator medium (3) and the discharging of heat accumulator medium (3) is inverted.

7. A heat accumulator (6) adapted for carrying out a method according to one of the previous claims 1 through 6, with a flow-through area (7a) for a working fluid (2) and an accumulator area (6a) having at least one heat accumulator medium (3), the flow-through area (7a) being separated materially from the accumulator area (6a) so that the working fluid (2) is guided without contact to heat accumulator medium (3) when flowing through, and flow-through area (7a) and accumulator area (6a) being interconnected such that a heat transfer is possible between working fluid (2) and heat accumulator medium (3) during charging and discharging of heat accumulator medium (3).

8. The heat accumulator according to claim 7, **characterized in that** the accumulator area (6a) has a supply line and a drain line for an auxiliary fluid (8), wherein the accumulator area (6a) can be flowed through by the auxiliary fluid (8).

9. A heat accumulator system (1) adapted for carrying out a method according to one of the previous claims 1 through 6, with a heat exchanger (6) according to one of the previous claims 7 or 8, a compressor (10), a phase converter (11) and, preferably, a pressure reducer (12), the heat accumulator (6), the compressor (10), the phase converter (11) and, preferably, the pressure reducer (12) being interconnected via a closed cycle duct for an auxiliary fluid (8).

## Revendications

1. Procédé de chauffage et de refroidissement d'un fluide de travail (2) au moyen d'au moins un agent d'accumulation de chaleur thermochimique (3), le fluide de travail (2) circulant au travers d'au moins un accumulateur de chaleur thermochimique (6) présentant l'agent d'accumulation de chaleur (3), le fluide de travail (2) étant acheminé sans contact avec l'agent d'accumulation de chaleur (3), un flux de chaleur (Q) étant transmis du liquide de travail (2) à l'agent d'accumulation de chaleur (3) lors d'une charge de ce dernier (3) et au moins une substance (15) étant libérée de l'agent d'accumulation de chaleur (3) et évacuée de l'accumulateur de chaleur (6) et, lors d'une décharge de l'agent d'accumulation de chaleur (3), la substance (15) étant amenée au moyen de la libération de chaleur à l'agent d'accumulation de chaleur (3) ou au moins au produit de réaction de l'agent accumulateur de chaleur (3) lors de la charge de ce dernier et un courant de chaleur (Q) étant transmis au fluide de travail (2),
**caractérisé en ce que**
la charge de l'agent d'accumulation de chaleur (3) est réalisée à un niveau de pression réduit et la décharge de l'agent d'accumulation de chaleur (3) est réalisée à un niveau de pression élevé.

2. Procédé selon la revendication 1, **caractérisé en ce que** la substance (15) évacuée à partir de l'accumulateur de chaleur (6) lors de la charge de l'agent d'accumulation de chaleur (3) est stockée et recyclée pour la décharge de l'agent d'accumulation de chaleur (3) vers l'accumulateur de chaleur (6).

3. Procédé selon la revendication 1 ou 2, **caractérisé en ce qu'**un fluide auxiliaire (8) est utilisé pour le transport de la substance (15) depuis l'accumulateur de chaleur (6) et/ou vers l'accumulateur de chaleur (6), le fluide auxiliaire (8) traversant l'accumulateur de chaleur (6) et étant dès lors mis en contact avec l'agent d'accumulation de chaleur (3) et/ou avec le produit de réaction de l'agent d'accumulation de chaleur (3).

4. Procédé selon l'une quelconque des revendications précédentes, **caractérisé en ce que** le fluide auxiliaire (8) est dirigé dans un circuit (9) préférablement fermé et séparé matériellement du chemin d'écoulement du fluide de travail (2), la substance (15) transportée au moyen du fluide auxiliaire (8) étant séparée de ce dernier lors de la charge de l'agent d'accumulation de chaleur (3) et stockée pour être utilisée lors de la décharge de l'agent d'accumulation de chaleur (3).

5. Procédé selon l'une quelconque des revendications précédentes, **caractérisé en ce que** la substance (15) libérée lors de la charge de l'agent d'accumulation de chaleur (3) est séparée du fluide auxiliaire (8) par transformation de phase et **caractérisé en ce que**, de préférence, l'énergie thermique (Q) libérée pendant la transformation de phase est au moins en partie stockée et utilisée pour une nouvelle transformation de phase de la substance (15) pour l'utilisation de cette dernière lors de la décharge de l'agent d'accumulation de chaleur (3).

6. Procédé selon l'une quelconque des revendications précédentes, **caractérisé en ce que** le sens de l'écoulement du fluide auxiliaire (8) est inversé lors du changement entre la charge et la décharge de l'agent d'accumulation de chaleur (3).

7. Accumulateur de chaleur (6) conçu pour réaliser un procédé selon l'une quelconque des revendications précédentes 1 à 6, avec une zone d'écoulement (7a) pour un fluide de travail (2) et au moins une zone de stockage (6a) qui présente un agent d'accumulation de chaleur (3), la zone d'écoulement (7a) étant séparée matériellement de la zone de stockage (6a) de sorte que le fluide de travail (2) est amené sans contact avec l'agent d'accumulation de chaleur (3) lors du passage et la zone d'écoulement (7a) et la zone de stockage (6a) étant reliées l'une à l'autre de sorte qu'un transfert de chaleur entre le fluide de travail (2) et l'agent d'accumulation de chaleur (3) lors de la charge et de la décharge de l'agent d'accumulation de chaleur (3) est possible.

8. Accumulateur de chaleur selon la revendication 7, **caractérisé en ce que** la zone de stockage (6a) présente une conduite d'arrivée et une conduite d'évacuation pour un fluide auxiliaire (8), la zone de stockage (6a) pouvant être traversée par le fluide auxiliaire (8).

9. Système d'accumulation de chaleur (1) conçu pour réaliser un procédé selon l'une quelconque des revendications précédentes 1 à 6, avec un accumulateur de chaleur (6) selon l'une quelconque des revendications 7 ou 8, un compresseur (10), un transformateur de phase (11) et, de préférence, un réducteur de pression (12), l'accumulateur de chaleur (6), le compresseur (10), le transformateur de phase (11) et, de préférence, le réducteur de pression (12) étant reliés entre eux au moyen d'une conduite de circulation en circuit fermé pour un fluide auxiliaire (8).
